Europäisches Patentamt

European Patent Office

Office européen des brevets

(11) Publication number: **0 197 188**
**B1**

## (12) EUROPEAN PATENT SPECIFICATION

(45) Date of publication of patent specification: **31.05.89**

(51) Int. Cl.⁴: **A 23 K 1/16, A 23 K 1/00**

(21) Application number: **85112698.7**

(22) Date of filing: **07.10.85**

(54) **Non-dusty blends of meals or flours with additives for use in fodder production.**

(30) Priority: **12.04.85 IT 2031585**

(43) Date of publication of application:
**15.10.86 Bulletin 86/42**

(45) Publication of the grant of the patent:
**31.05.89 Bulletin 89/22**

(84) Designated Contracting States:
**AT BE CH DE FR GB LI LU NL SE**

(56) References cited:
**FR-A-2 518 426**
**GB-A-1 504 029**
**US-A-3 468 667**
**US-A-3 531 563**
**US-A-3 617 299**
**CHEMICAL ABSTRACTS, vol. 96, no. 9, 1st March 1982, page 487, no. 67526b, Columbus, Ohio, US; & HU - A - 20 490 (E. GY. T. GYOGYSZERVEGYESZETI GYAR) 28-08-1981**

(73) Proprietor: **DOX-AL ITALIA S.p.A.**
**Via E. Fermi 2**
**I-20050 Correzzana Milano (IT)**

(72) Inventor: **Grabitz, Ernst**
**via S.Eurosia 8/D**
**Casatenova (Como) (IT)**

(74) Representative: **Gervasi, Gemma, Dr. et al**
**Studio Brevetti e Marchi NOTARBARTOLO & GERVASI 33, Viale Bianca Maria**
**I-20122 Milano (IT)**

## Description

### Disclosure

The present invention relates to a process for the preparation of blends for use in fodder production constituted by meals of flours, and additives, of reduced dustiness.

More particularly, the present invention relates to a process for the preparation of blends for use in fodder production and/or for livestock feeding, either soluble or not, of low dustiness, by means the addition to the carrier substance of an active principle and of easily applicable surfactants.

It is known that the additives for use in fodder production, e.g. antibacterials such as Carbadox, due to their chemical-physical characteristics, and in particular due to their granulometric characteristics, give rise to the phenomenon of dustiness, and this causes several drawbacks in the use of such products, in particular as for the dangerousness for the users, but also due to the fact that in the blending step it is not possible to obtain a homogeneous product.

In fact, the additives, in particular antibacterials, for fodder production show a granulometric composition having about 30% by weight lower than 10 µm in size; moreover, in case in which the active principle is constituted by Carbadox, the crystals are very crumbly and during the blending operations they tend to assume a still more reduced size.

Taking into account that the substances acting as the carrier, either alone or mixed to each other, have an unequal and considerably higher granulometry, the powder exiting from the blender is essentially constituted by Carbadox and this causes a hot homogeneous blending and the obtainment of a product with a titer different from the desired value.

The blending operations are carried out in closed equipment, however the drawbacks of occasional leaks and the dangerousness of the dusts for the user are always remaining.

It must moreover be always kept in mind the danger of the inflammability and of the explosiveness of Carbadox thin powders, thereby these powders, e.g. cannot be conveyed by air freight.

Processes are known for the preparation of non-dusty blends for use in fodder production; as an example, according to Italian Patent 1 046 986 blends are prepared of meal with a quinoxaline-1,4-dioxide antibacterial agent, such blends being made non-dusty by means of the addition of a non-toxic oil.

For this preparation to be efficient, it must be carried out in three steps: in the first step, a first share of the oil is blended with the meal, in the second step the antibacterial agent is mixed and in the third step the residual portion of the oil is mixed.

In addition to the complexity of the multi-step operations, the addition of the oil to the blend involves laboriousness in blending and the decrease of the free-flowing characteristics of the blend and does not favour the electrical conductivity.

It must be observed indeed that many additives have such electrostatic characteristics, as to make it difficult to homogenize the blend, in that the additive tends to accumulate in dead areas of the blender and on the walls thereof, causing also problems of powder auto-ignition and explosion.

We have now found a process for the obtainment of non-dusty blends of meals, or flours, with additives for use in the fodder manufacturing, and/or for livestock feeding, which allows these drawbacks to be overcome, and in particular it to operate in a single step, highly freelowing products being obtained.

Moreover, by means of this process the drawbacks due to the electrostatic discharges are eliminated: the blends obtained by means of the known technique show indeed a resistivity of more than 20 MΩ, measured by means of a sensor at a depth of 15 cm and with a distance of 13 mm between the electrodes, whilst the blends obtained according to the present invention have a resistivity of 3 MΩ, as measured by the same way.

The process for the preparation of non-dusty blends of meals or flours with additives for use in the fodder manufacturing, according to the present invention, is characterized in that in a powder blender the supporting meal, or flour is loaded, and to it an anti-dust additive, containing a non-ionic, physiologically compatible surfactant, and the desired additive, as a powder, is added, and the mixture is homogenized by blending.

These and other characteristics of the process according to the present invention shall be better evidenced by the following disclosure which relates to a preferred embodiment thereof, and which is reported to illustrative and non limitative purposes.

Into a blender of the type normally employed for the blending of powder-like substances, the meal or flour is loaded, which is intended to act as the support for the active principle. The blender may be e.g. of the horizontal type, with two blending reels or combined with blades, or of the shear and thrust type.

Examples of meals or flours suitable to the use in the present process are: cereal meals and flours and brans, by-products related thereto, sugars, glutens, proteinic meals of vegetable and animal origin, both from fermentation and not, residual yeasts of industrial processes outcoming from fermentation, oil-seed extraction meals, ground mineral powders of either natural or chemical-industrial origin, alone or mixed to each other.

These meals or flours have, in general, the following characteristics: granulometry: 80% by weight comprised between 20 and 80 mesh; moisture: from 2 to 13% by weight.

Onto these meals, or flours, during the blending a non-ionic, physiologically compatible surfactant is sprayed.

The spraying is carried out by means of dispersers of micronized liquid, such as e.g. by means of compressed-air atomizer nozzles for pressurized liquid; before, or during, or after the addition of the surfactant, the active principle is added in a powder form; the homogenizing of the system is accomplished by blending.

Examples of non-ionic surfactants which may be used in the process according to the invention are: monoesters of propylene glycol and of alimentary fatty acids; stearyl-2-lactyl acid; acetic, lactic, citric, tartaric, monoacetyltartaric esters of mono- and -diglycerides of alimentary fatty acids; glycerol-polyethylene glycol ricinoleate; polyethylene glycol esters of soybean oil fatty acids; sorbitan monostearate; sorbitan tristearate; sorbitan monolaurate; sorbitan monooleate, sorbitan monopalmitate, proylene glycol alginate.

Moreover, mixtures of these surfactants with polyethylene glycol and/or with propylene glycol and/or with glycerol may be used.

Also liquid preservatives acting as mould inhibitors, such as propionic acid, formic acid, lactic acid and others may be added. These substances are preferably added to the mixture to be sprayed and serve also to make it more fluid, and completely mixable.

The additive which is incorporated inside the blend, e.g., Carbadox, Nitrovin, Olaquindox, Furazolidone, Dimetridazole and others, shows the following granulometric characteristics: 90—95% by weight <80 mesh.

The amount of surfactant to be used is comprised within the range of from 0.5 to 8% and preferably of from 1 to 2% by weight relatively to the flour or meal, the amount of polyethylene glycol or of propylene glycol or of glycerol is comprised within the range of from 0.5 to 10% and preferably of from 2 to 4% by weight relatively to the meal or flour and the amount of mould inhibiting preservative liquids is comprised between 0.1 and 5% by weight and preferably between 0.3 and 2% by weight relatively to the meal or flour.

The amount of the additive in the blend is comprised within the range of from 2 to 80% and preferably of from 5 to 20% by weight.

The following Examples are reported to the purpose of illustrating the invention, without being limitative thereof.

Example 1

Into a blender for powder-like substances of the horizontal type, 840 kg of a meal constituted by corn fodder meal 40%, soybean meal 40% and calcium carbonate 20% by weight, and 102.5 kg of Carbadox at 99.2% by weight and having the granulometry: 93% by weight <80 mesh, were charged.

By means of four sprayers with compressed-air atomizer nozzles for pressurized liquids, 15 kg of glycerol-polyethylene glycol ricinoleate premixed with 35 kg of 1,2-propanediol and 10 kg of propionic acid were added.

The spraying was carried out with the blender being run, in a 5 minute time; the blending was thereafter continued for a further 20 minutes.

The incorporation of Carbadox into the meal-surfactant blend resulted to be very homogeneous and the blend obtained did not give rise to a noticeable dust formation and moreover showed highly free-flowing characteristics, and resistivity lower than 3 MΩ, as measured with the sensor being at a depth of 15 cm, and with a distance of 13 mm between the electrodes.

The dustiness of the blend obtained was determined by the following method, which has been got ready to the purpose of measuring the dustiness of the Carbadox-meals blend under the conditions of use thereof by the users. The contents of the bag containing the Carbadox-meal blend is poured by an operator into a flat-bottomed tray placed close to his feet, and at the same time samples are drawn of atmosphere contaminated by the dust possibly suspended therein.

The sampling is carried out by using the "SAS Compact" (Surface Air System) equipment of pbi International, equipped with a modified head onto which Sartorius filters of regenerated cellulose (ref. SM 11606) are installed.

The whole sampling equipment is positioned by means of a fixed frame at a level of about 150 cm from the plane onto which the blend is poured; at the end, the filter is disassembled from the head, and possibly deposited Carbadox is extracted, and the determination is continued by HPLC (High-Pressure Liquid Chromatography) as described by Lowie et al. in J. Assoc. Off. Anal. Chem. (Vol. 66, No. 3, pages 602—605, 1983).

The following results were obtained: amount of Carbadox lower than 10 µg/m$^3$ of atmospheric air (data obtained from three measurements).

(Comparison) Example 2

Example 1 was repeated by using the same operating procedures, the same equipment and the same amounts of substances, with the exception that the anti-dust mixture according to the invention was not added.

The dustiness of the blend obtained was determined by the method described under Example 1 and from three separate tests the following results were obtained.

Carbadox mg/m$^3$ of atmopsheric air:

| Test No. 1: | 4 mg/m$^3$ |
|---|---|
| Test No. 2: | 6 mg/m$^3$ |
| Test No. 3: | 23 mg/m$^3$ |

Sensor-measured resistivity higher than 20 MΩ.

Example 3

Example 1 was repeated, by using the same equipment, the same operating procedures and the same amounts of substances, with the exception that 8 kg of glycerol-polyethylene glycol ricinoleate, 30 kg of glycerol and 5 kg of lactic acid were used.

The dustiness of the blend obtained was determined by the method described under Example 1 and the following results were obtained: Carbadox amount lower than 15 µg per m³ of atmospheric air.

Resistivity lower than 3 MΩ.

Example 4

Example 1 was repeated, by using the same equipment, the same operating procedures and the same amounts of substances, with the exception that as the anti-dust agent 15 kg of polyoxyethylene-sorbitan monooleate and 45 kg of 1,2-propane-diol were used.

The dustiness of the blend obtained was determined by the method described in Example 1, and the following results were obtained: Carbadox content lower than 10 µg/ m³ of atmospheric air (data obtained from three measurements).

Sensor-measured resistivity: lower than 3 MΩ.

**Claims**

1. Process for the preparation of non-dusty blends constituted by additives in particular antibacterials for use in fodder manufacturing on a support or supports having the physical form of a meal or flour, either soluble or not soluble, characterized in that into a powder blender the selected support or supports is/are loaded, which is/are blended with an additive and sprayed with an anti-dust additive containing a physiologically compatible non-ionic surfactant.

2. Process according to claim 1, characterized in that to the selected support or supports, said anti-dust additive containing said surfactant is added, and the additive is added thereafter.

3. Process according to claim 1, characterized in that said meals or flours are selected from the group comprising: cereal meals, flours and brans, related by-products, sugars, glutens, starches, proteinic meals of both vegetable and animal origin, both from fermentation and not, residual yeasts from industrial processes outcoming from fermentations, oil-seed extraction meals, ground mineral powders either of natural or of chemical-industrial origin, either alone or mixed to each other, having a granulometry of more than 80% by weight comprised between 20 and 80 mesh, and a moisture content comprised between 2 and 13% by weight.

4. Process according to claim 1, characterized in that said surfactant is selected from the group of: monoesters of propylene glycol and of alimentary fatty acids; stearyl-2-lactyl acid; acetic, lactic, citric, tartaric, monoacetyltartaric esters of mono- and di-glycerides of alimentary fatty acids; glycerol-polyethylene glycol ricinoleate; polyethylene glycol esters of soybean oil fatty acids; sorbitan monostearate; sorbitan tristearate; sorbitan monolaurate; sorbitan monooleate; sorbitan monopalmitate; propylene glycol alginate.

5. Process according to claim 1, characterized in that said antibacterial additive is Carbadox.

6. Process according to claim 1, characterized in that said antibacterial additive is Nitrovin.

7. Process according to claim 1, characterized in that said antibacterial additive is Olaquindox.

8. Process according to claim 1, characterized in that said antibacterial additive is Furazolidone.

9. Process according to claim 1, characterized in that said antibacterial additive Dimetridazole.

10. Process according to claim 1, characterized in that said additive is incorporated in the meal or in the flour to which the surfactant has been added, by blending.

11. Process according to claim 1, characterized in that said surfactant is added by spraying by means of a disperser of micronized liquid, onto the meal or flour being blended.

12. Process according to claim 1, characterized in that said surfactant is used in mixture with polyethylene glycol or propylene glycol or glycerol.

13. Process according to claim 1 characterized in that said surfactant is used in mixture with mould inhibiting preservatives.

14. Process according to claim 1, characterized in that said surfactant is used in an amount comprised within the range of from 0.5 to 8% and preferably of from 1 to 2% by weight relatively to the flour or meal.

15. Process according to claim 1, characterized in that said additive in the blend is comprised within the range of from 2 to 80% and preferably of from 5 to 20% by weight.

16. Process according to claim 9, characterized in that said polyethylene glycol or propylene glycol or glycerol are used in an amount comprised between 0.5 and 10% by weight relatively to the meal or flour.

17. Process according to claim 10, characterized in that said anti-mould preservatives are used in an amount comprised within the range of from 0.1 to 5% and preferably of from 0.3 to 2% by weight relatively to the meal or flour.

18. Non-dusty blends having the form of meals or flours, soluble and not, with additives for use in fodder manufacturing prepared according to claims from 1 to 17.

**Patentansprüche**

1. Verfahren zur Herstellung von nicht-staubigen Mischungen bestehend aus Additiven, insbesondere antibakteriellen Mitteln, zur Verwendung in der Tierfutterherstellung auf einem Träger oder Trägern mit der physikalischen Form eines Mehls, das löslich oder nicht-löslich ist, dadurch gekennzeichnet, daß der gewählte Träger oder die Träger in einen Pulvermischer eingebracht wird/werden, der/die mit einem Additiv gemischt und und mit einem Antistaubadditiv, das ein physiologisch verträgliches nicht-ionisches oberflächenaktives Mittel enthält, besprüht wird/werden.

2. Verfahren nach Anspruch 1, dadurch gekennzeichnet, daß dem gewählten Träger oder den Trägern das das oberflächenaktive Mittel enthaltende Antistaubaddditiv zugesetzt wird und das Additiv anschließend zugegeben wird.

3. Verfahren nach Anspruch 1, dadurch gekennzeichnet, daß die Mehle ausgewählt sind aus der Gruppe umfassend Cerealienmehle und Kleien, damit im Zusammenhang stehende Nebenprodukte, Zucker, Glutene, Stärken, proteinische Mehle pflanzlichen und tierischen Ursprungs, beide gegebenenfalls von der Fermentation, Rückstandshefen von Industrieverfahren, die von Fermentationen stammen, ölsamenextraktionsmehle, gemahlene Mineralpulver entweder natürlichen oder chemisch-industriellen Ursprungs, allein oder miteinander gemischt, mit einer Granulometrie von mehr als 80 Gew.% zwischen 20 und 80 Mesh und einem Feuchtigkeitsgehalt von 2 bis 13 Gew.%.

4. Verfahren nach Anspruch 1, dadurch gekennzeichnet, daß das oberflächenaktive Mittel ausgewählt ist aus der Gruppe von Monoestern von Propylenglykol und von Ernährungsfettsäuren; Stearyl-2-lactylsäure; Essig-, Milch-, Citronen-, Wein-, Monoacetylweinsäureestern von Mono- und Diglyceriden von Ernährungsfettsäuren; Glycerin-Polyäthylenglykolricinoleat; Polyäthylenlykolestern von Sojabohnenölfettsäuren; Sorbitanmonostearat; Sorbitantristearat; Sorbitanmonolaurat; Sorbitanmonooleat; Sorbitanmonopalmitat; Propylenglykolalginat.

5. Verfahren nach Anspruch 1, dadurch gekennzeichnet, daß das antibakterielle Additiv Carbadox ist.

6. Verfahren nach Anspruch 1, dadurch gekennzeichnet, daß das antibakterielle Additive Nitrovin ist.

7. Verfahren nach Anspruch 1, dadurch gekennzeichnet, daß das antibakterielle Additiv Olaquindox ist.

8. Verfahren nach Anspruch 1, dadurch gekennzeichnet, daß das antibakterielle Additiv Furazolidon ist.

9. Verfahren nach Anspruch 1, dadurch gekennzeichnet, daß das antibakterielle Additiv Dimetridazol ist.

10. Verfahren nach Anspruch 1, dadurch gekennzeichnet, daß das Additiv dem Mehl, welchem das oberflächenaktive Mittel zugesetzt wurde, durch Mischen einverleibt wird.

11. Verfahren nach Anspruch 1, dadurch gekennzeichnet, daß das oberflächenaktive Mittel durch Sprühen mit einer Dispergiervorrichtung für zerstäubte Flüssigkeit auf das Mehl beim Durchmischen zugesetzt wird.

12. Verfahren nach Anspruch 1, dadurch gekennzeichnet, daß das oberflächenaktive Mittel in Mischung mit Polyäthylenglykol, Propylenglykol oder Glycerin verwendet wird.

13. Verfahren nach Anspruch 1, dadurch gekennzeichnet, daß das oberflächenaktive Mittel in Mischung mit schimmelinhibierenden Konservierungsmitteln verwendet wird.

14. Verfahren nach Anspruch 1, dadurch gekennzeichnet, daß das oberflächenaktive Mittel in einer Menge im Bereich von 0,5 bis 8 Gew.%, vorzugsweise 1 bis 2 Gew.-%, bezogen auf das Mehl, verwendet wird.

15. Verfahren nach Anspruch 1, dadurch gekennzeichnet, daß das Additiv in der Mischung im Bereich von 2 bis 80 Gew.%, vorzugsweise 5 bis 20 Gew.%, vorhanden ist.

16. Verfahren nach Anspruch 9, dadurch gekennzeichnet, daß das Polyäthylenglykol, Propylenglykol oder Glycerin in einer Menge von 0,5 bis 10 Gew.%, bezogen auf das Mehl, verwendet wird.

17. Verfahren nach Anspruch 10, dadurch gekennzeichnet, daß die Antischimmelkonservierungsmittel in einer Menge im Bereich von 0,1 bis 5 Gew.%, vorzugsweise 0,3 bis 2 Gew.%, bezogen auf das Mehl, verwendet werden.

18. Nicht-staubige Mischungen in Form von Mehlen, die gegebenenfalls löslich sind, mit Additiven zur Verwendung bei der Tierfutterherstellung, hergestellt nach den Ansprüchen 1 bis 17.

**Revendications**

1. Procédé pour la préparation de mélanges ne dégageant pas de poussières, constitués d'additifs, en particulier antibactériens, pour utilisation dans la fabrication de fourrage pour l'alimentation animale, sur un ou plusieurs supports ayant la forme physique d'une moulée ou d'une farine, soluble ou insoluble, caractérisé par le fait qu'on introduit dans un mélangeur à poudres le ou les supports sélectionnés, lesquels sont mélangés à un additif et saupoudrés avec un additif antipoussières contenant un tensio-actif non ionique physiologiquement compatible.

2. Procédé selon la revendication 1, caractérisé par le fait qu'on ajoute ledit additif anti-poussières contenant ledit tensio-actif au ou aux supports sélectionnés, puis qu'on ajoute l'additif ensuite.

3. Procédé selon la revendication 1, caractérisé par le fait que lesdites moulées ou farines sont choisies dans le groupe comprenant les farines, moulées et sons de céréales, les sous-produits correspondants, les sucres, les glutens, les amidons, les farines protéiques d'origine animale ou végétale, obtenues par fermentation ou non, les levures résiduelles des processus industriels et provenant de fermentations, les farines obtenues par extraction à partir de graines oléagineuses, les poudres minérales broyées d'origine naturelle ou chimique, seules ou en mélanges les uns avec les autres, avec une granulométrie comprise entre 0,841 et 0,177 mm (20 et 80 mesh) pour plus de 80% en poids du mélange, et avec une teneur en humidité comprise entre 2 et 13% en poids.

4. Procédé selon la revendication 1, caractérisé par le fait que ledit tensio-actif est choisi dans le groupe comprenant les monoesters du propylène glycol et des acides gras alimentaires; l'acide stéaryl-2-lactique; les esters acétique, lactique, citrique, tartrique, monoacétyltartrique des mono- et diglycérides des acides gras alimentaires; le ricinoléate de glycérol polyoxyéthyléné; les esters de polyéthylène glycol des acides gras dérivés de l'huile de soja; le monostéarate de sorbitol; le tristéarate de sorbitol; le monolaurate de sorbitol; le monooléate de sorbitol; le monopalmitate de sorbitol; l'alginate de propylène glycol.

5. Procédé selon la revendication 1, caractérisé par le fait que ledit additif antibactérien est le Carbadox.

6. Procédé selon la revendication 1, caractérisé par le fait que ledit additif antibactérien est le Nitrovin.

7. Procédé selon la revendication 1, caractérisé par le fait que ledit additif antibactérien est l'Olaquindox.

8. Procédé selon la revendication 1, caractérisé par le fait que ledit additif antibactérien est le Furazolidone.

9. Procédé selon la revendication 1, caractérisé par le fait que ledit additif antibactérien est le Dimétridazole.

10. Procédé selon la revendication 1, caractérisé par le fait que ledit additif est incorporé par mélange dans la farine ou la moulée à laquelle a été ajouté le tensio-actif.

11. Procédé selon la revendication 1, caractérisé par le fait que ledit tensio-actif est ajouté par saupaudrage, sur la moulée ou la farine ayant fait l'objet du mélange, au moyen d'un disperseur d'un liquide micronisé.

12. Procédé selon la revendication 1, caractérisé par le fait que ledit tensio-actif est utilisé en mélange avec du polyéthylène glycol ou du propylène glycol ou du glycérol.

13. Procédé selon la revendication 1, caractérisé par le fait que ledit tensio-actif est utilisé en mélange avec des conservateurs inhibiteurs de moisissures.

14. Procédé selon la revendication 1, caractérisé par le fait que ledit tensio-actif est utilisé en une quantité comprise entre 0,5 et 8%, de préférence entre 1 et 2% en poids par rapport à la farine ou à la moulée.

15. Procédé selon la revendication 1, caractérisé par le fait que ledit additif, dans le mélange, compte pour 2 à 80%, et de préférence 5 à 20% en poids.

16. Procédé selon la revendication 9, caractérisé par le fait que ledit polyéthylène glycol ou polypropylène glycol ou glycérol est utilisé en une quantité comprise entre 0,5 et 10% en poids par rapport à la farine ou à la moulée.

17. Procédé selon la revendication 10, caractérisé par le fait que lesdits conservateurs anti-moisissures sont utilisés en une quantité comprise entre 0,1 et 5%, et de préférence entre 0,3 et 2% en poids par rapport à la farine ou à la moulée.

18. Mélanges ne dégageant pas de poussières, se présentant sous la forme de moulées ou de farines, solubles ou insolubles, avec des additifs, pour utilisation lors de la fabrication d'aliments pour alimentation animale obtenus selon les revendications 1 à 17.